# EUROPEAN PATENT SPECIFICATION

(11) **EP 0 961 910 B1**
(45) Date of publication and mention of the grant of the patent: **13.11.2002**
(21) Application number: 98915106.3
(22) Date of filing: 03.02.1998
(51) Int. Cl.: F25D 23/02, F25D 23/06, F25D 23/08

(54) **METHOD FOR PRODUCING A REFRIGERATOR DOOR WITH AN ADVANCED INSULATION AND RE-CYCLING PERFORMANCE**
HERSTELLUNGSVERFAHREN EINER KÜHLSCHRANKTÜR MIT HOCHWERTIGER ISOLIERUNG UND WIEDERGEWINNUNGSLEISTUNG
PROCEDE DE PRODUCTION D'UNE PORTE DE REFRIGERATEUR A SYSTEME ISOLANT PERFECTIONNE ET ENTIEREMENT RECYCLABLE

(30) Priority: 03.02.1997 TR 9700083
(43) Date of publication of application: 08.12.1999
(73) Proprietor: Arcelik A.S., 81719 Tuzla, Istanbul (TR)
(72) Inventor: ÖZKADI, Fatih, 81110 Atasehir,Istanbul (TR); YAVUZ, Nihat, 81110 Göztepe,Istanbul (TR); ODABAS, Sibel, 81090 Kozyatagi,Istanbul (TR)
(74) Representative: LOUIS, PÖHLAU, LOHRENTZ & SEGETH
(86) International application number: TR9800004
(87) International publication number: WO98034077

(56) References cited:
- EP-A- 0 747 646
- WO-A-97/12100
- JP-A- 56 015 342
- US-A- 5 418 055
- US-A- 5 533 311

## Description

The present invention is related to a method for producing a refrigerator door, inner and outer surfaces of which are plastic coated and which contains no polyurethane in its insulation system.

Refrigerators are cooling and/or freezing devices manufactured for the purpose of keeping food fresh. A refrigerator is desired to have as large an inner volume as possible and to consume little energy. Besides these, after completing their service lives easy decomposition and recycling properties of the parts and materials constituting the refrigerator, are quite important with regard to environment protection problems.

The major parameter for a refrigerator in order to have a large inner volume and to consume less energy, is its insulation system. From the insulation system of a refrigerator, the type and heat transfer coefficient of the insulating material, type and heat transfer coefficients of inner and outer lining materials of a refrigerator and insulating thickness of the walls of a refrigerator are easily understood.

In order to provide less consumption of energy, the heat gain of the refrigerator must be reduced as much as possible. This is provided by the improvement of the insulation system which can be achieved by increasing the insulation thicknesses of the presently used systems or by developing a new system with a lower heat transfer coefficient.

As the external dimensions particularly as depth and width of the refrigerators are restricted by standards, reducing the thickness of insulated walls appears to be the only solution when inner volume is intended to be widened. In the known insulation systems, reducing the thickness of insulating walls, leads to an increase in the refrigerator heat gain, and therefore more energy consumption. In this case in order to meet optimally the wide inner volume and low energy consumption expectations, a more effective insulation system has to be used.

In addition to the above mentioned expectations, such properties as easy decomposability and recyclability with a relatively low cost of the material and components, are taken into consideration in the new insulation system. For this reason, at the design stage of a refrigerator, recycling and re-usage possibilities have to be considered and reflected to the design.

In the insulation systems of the existing refrigerators, steel sheet, thermoplastic material [polystyrene (PS) or acrylonitrile butadiene styrene (ABS)] and as insulation material polyurethane, are commonly used.

Steel sheet is used to form the outer surface of refrigerator cabin and doors, whereas the inner surface are lined with thermoplastic material. Polyurethane is used to fill the space between inner and outer liners.

When liquid polyurethane, obtained by mixing poliol, isocyanate and a blowing agent in given proportions, is injected into the insulation space, it takes the form of a foam that adheres both to the steel sheet as the outer lining material and to the plastic being the inner lining material. As it also adheres to the door gasket, it helps the fixation of the gasket in the system. By means of this adherence, in general, a strong structure for the refrigerator is obtained. However, since polyurethane is a thermoset material, it cannot be recycled. Furthermore, as it adheres to the steel sheet and to the plastic, after the service-life is completed it causes difficulties in decomposition of these components during disassembly and increases the cost of this operation.

The above mentioned existing insulation systems and the combined structure of the materials used in these systems make the recycling process very difficult, even impossible. In addition, by these systems it is not possible to obtain a wider inner volume with constant external dimensions and to provide less energy consumption without modifying the existing cooling system.

As giving a steel sheet the desired form is quite difficult and expensive, its use as outer lining requires some processes for aesthetic purpose and restricts the design freedom.

There are some studies proposing the use of plastics in manufacturing refrigerators, particularly refrigerator doors. In the US Patent No. 5.533.311, a unitary plastic refrigerator door made by thermoforming an outer refrigerator door liner with an inner refrigerator door liner. The inner plastic liner is designed so that it press-fittingly receives the door gasket designed previously and the inner plastic is attached to the outer plastic door liner. Into an internal chamber (space) defined between the outer door liner and inner door liner a foam is injected. No explanatory technical details about this foam are given in the said document.

The Japan patent No. 8.189.755, discloses that the exterior of the refrigerator door is made of thermoplastic resin and the inner part of it from plastic. Inner and outer plastic liners are attached to each other by means of a specific profile and the gasket is held in the system also by means of this profile. The space defined between these two liners is filled with a heat insulator. No detailed information was given in the said document. On the exterior side of the refrigerator, the profile is provided with a decorative sheath at the edge.

In the US Patent No 5 306 082, an "all plastic refrigerator" manufactured by blow moulding process is mentioned. Some structural shelf-like forms are created by the help of the recesses formed inside the inner door member, for the purpose of storing food. Inside the insulation space such non-rigid insulating material as blown foam element and weak fiberglass particules are filled.

The above mentioned patents do not bring a new proposal with regard to insulation systems, although they provide the inner and outer sides of the refrigerator door to be formed by using plastic.

In the European Patent No. 747646, for the sake of recyclability, the interspace between the outer and inner liners of a refrigerator cabinet is filled with expanded polystyrene and vacuum insulation liners such as an aluminium envelope containing a sheet of polystyrene is inserted in a seat provided in the refrigerator door. The vacuum insulation liners are being easily dismantled into related elements to facilitate recycling when fed to demolition.

The object of the invention is to provide a production method for a refrigerator door and/or cabinet with a better insulation system and re-cycling performance.

This object is achieved according to the method as defined in claim 1.

A preferred embodiment of a refrigerator door produced according to the invention is illustrated in the attached drawings, wherein:

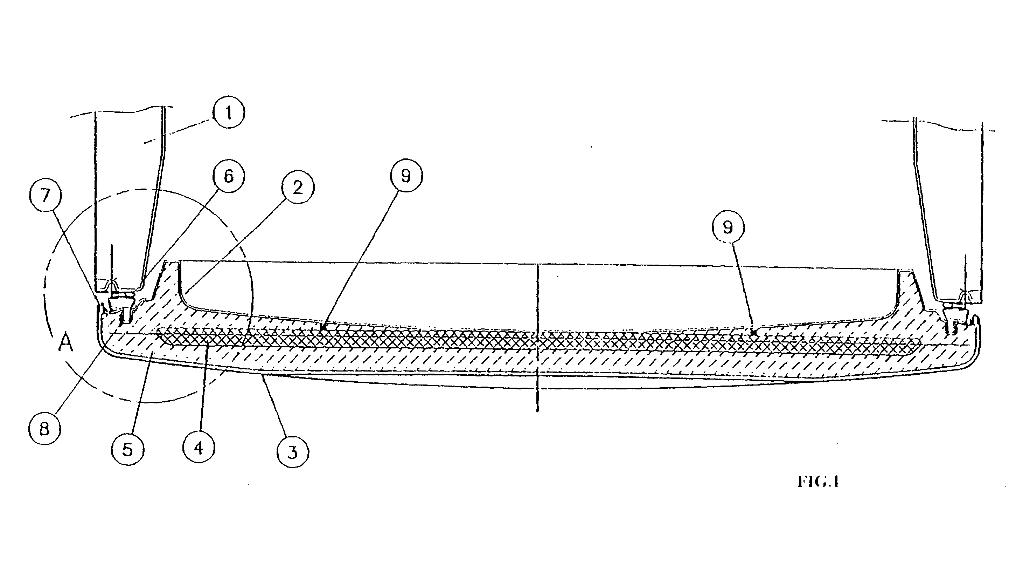

Figure 1, is the cross-section view of the refrigerator door;
Figure 2, is the section view of detail A shown in Fig. 1.

The corresponding component reference numbers are as follows;
1) Refrigerator cabinet
2) Inner plastic liner
3) Outer plastic liner
4) Vacuum insulation liner (VIP)
5) Expanded polystyrene (EPS)
6) Gasket
7) Plastic decorative cover
8) Gasket recess
9) Mould support element

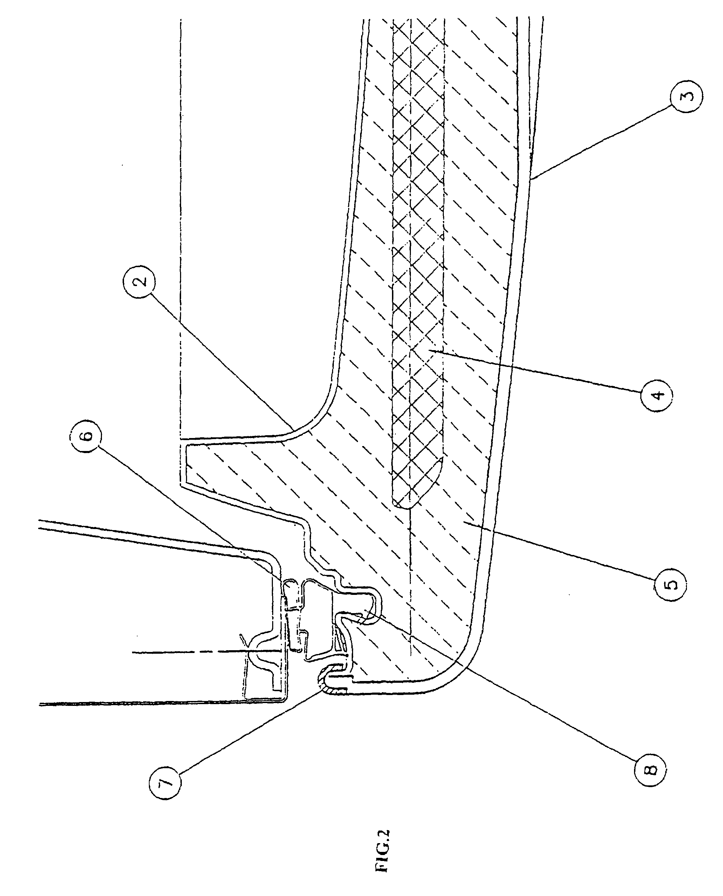

In the refrigerator according to the present invention, a plastic liner (2) constitutes the inner surface of the door. This liner (2) is formed by vacuum thermoforming process. A gasket (6) used to provide the insulation between the refrigerator door and cabinet (1) is fit into a gasket recess (8) designed on the surface of the inner plastic liner (2) and its profile is shown in detail in Figure 2. The outer surface of the door is lined by a plastic liner (3) which is advantageously made by a thermoforming process enabling the designers to give the desired aesthetic appearance.

For the insulation system of the said refrigerator door of the present invention, a combined structure consisting of vacuum insulation liner (VIP) (4) and expanded polystyrene (EPS) (5) is used instead of polyurethane. This structure is prepared so that it fills the space defined between the inner and outer plastic liners (2 and 3) by being placed into a mould assembly consisting of male and female mould elements. After closing the moulds in such a manner that they receive the vacuum insulation liner (4), expanded polystyrene granules are injected into the space defined between them and subjected to steam process. After injection all VIP is left within the expanded polystyrene thus providing the two materials to constitute a combined structure. During polystyrene injection, the moulds are placed horizontally by means of the mould supporting elements (9). It is also possible to place said moulds vertically.

Then, the above described combined structure is located between the inner and outer plastic liner (2 and 3).

These plastic liners are joined to each other, according to the principle of melting the plastics and welding them together by strongly pressing on each other, by using such methods as ultrasonic welding, vibration-welding etc. at their contact points. After the completion of all joining and assembly processes, the joining seam is covered by a plastic decorative sheath (7) to provide an aesthetic appearance.

This insulation system can easily be disassembled and decomposed at the end of its usage life. As expanded polystyrene does not adhere to the inner and outer plastic liners, the said plastic liners may be recycled and put in the form of granules. Moreover, polystyrene is also a thermoplastic based material such as the said plastic liners and can be recycled, just like the VIPs which can be reused unless deformed by any impact. Consequently, a VIP that can be taken out of an old refrigerator, may be used for the insulation system of another refrigerator.

Although the preferred embodiment of the present invention is disclosed for a refrigerator door, the above mentioned combined structure may be used also for the walls of refrigerator cabinets.

## Claims

1. A method for producing a refrigerator door and/or cabinet wall comprising the steps of: a vacuum insulation liner (4) is placed horizontally or vertically into a mould assembly consisting of male and female mould units, by means of mould support elements (9); after closing the moulds in such a manner that they contain the vacuum insulation liner (4), expanded polystyrene granules are injected into the gap defined between the two moulds and are subjected to steam fusing; following the injection process the vacuum insulation liner is completely left within expanded polystyrene in order to form a combined structure consisting of these two materials and this combined structure is placed between inner and outer plastic liners (2 and 3).

2. A method as claimed in claim 1, further comprising the steps of: joining the plastic liners (2 and 3) according to the principle of melting the plastics and welding them together by strongly pressing on each other at their contact points and covering the joining seam with a plastic decorative cover (7) to provide an aesthetic appearance.

## Patentansprüche

1. Verfahren zum Herstellen einer Kühlschranktür und/oder einer Gehäusewand, das die folgenden Schritte umfaßt: horizontales oder vertikales Anordnen einer Vakuumisolierverkleidung (4) mittels Gießformtragelementen (9) in einer Gießform-Baueinheit, die aus außenseitigen und innenseitigen Gießformeinheiten besteht, nach dem Schließen der Gießformen in der Weise, daß diese die Vakuumisolierverkleidung (4) enthalten; Einspritzen von expandiertem Polystyrol-Granulat in den Spalt, der zwischen den beiden Gießformen definiert ist; und Ausüben einer Dampfschmelzung auf das Granulat; nach dem Einspritzprozeß vollständiges Zurücklassen der Vakuumisolierverkleidung in dem expandierten Polystyrol, um eine kombinierte Struktur zu schaffen, die aus diesen beiden Werkstoffen besteht, wobei diese kombinierte Struktur zwischen inneren und äußeren Kunststoffverkleidungen (2 und 3) angeordnet wird.

2. Verfahren nach Anspruch 1, das ferner die folgenden Schritte umfaßt: Verbinden der Kunststoffverkleidungen (2 und 3) gemäß dem Prinzip des Schmelzens der Kunststoffe und Verschweißen der Kunststoffverkleidungen (2 und 3) durch starkes Pressen der Kunststoffverkleidungen (2 und 3) gegeneinander an ihren Kontaktpunkten; und Abdecken der Verbindungsnaht mit einer Kunststoffverzierungsabdeckung (7), um ein ästhetisches Erscheinungsbild zu schaffen.

## Revendications

1. Une méthode pour la fabrication d'une porte de réfrigérateur et/ou d'une paroi d'armoire, comprenant les étapes consistant à : placer un revêtement d'isolement sous vide (4) horizontalement ou verticalement dans un assemblage de moule constitué par des unités mâles et femelles de moules au moyen d'éléments de supports de moules (9) ; après fermeture des moules d'une manière telle qu'ils enferment le revêtement isolant sous vide (4), injecter des granules de polystyrène expansé dans l'espace défini entre les deux moules et leur soumission à une fusion à la vapeur d'eau ; après le processus d'injection, laisser le revêtement d'isolement sous vide complètement à l'intérieur du polystyrène expansé en vue de former une structure combinée consistant en ces deux matériaux et cette structure combinée placée entre les revêtements plastiques intérieur et extérieur (2 et 3).

2. Une méthode selon la revendication 1, comprenant au surplus les étapes consistant à : réunir les revêtements plastiques (2 et 3) selon le principe de la fusion des matières plastiques et de leur soudure entre elles sous l'effet d'une forte pression l'une sur l'autre en leurs points de contact et recouvrir les joints de soudure au moyen d'un revêtement plastique décoratif (7) en vue de procurer un aspect esthétique.
